# EUROPEAN PATENT SPECIFICATION

(11) **EP 4 237 974 B1**
(45) Date of publication and mention of the grant of the patent: **05.03.2025**
(21) Application number: 21802277.0
(22) Date of filing: 28.10.2021
(51) Int. Cl.: G06F 21/35, H04L 9/32, B60L 53/60, B60L 53/66, H04L 9/40, G07F 9/00, G07F 15/00, H02J 7/00

(54) **SYSTEM FOR AUTHENTICATING A USER AT AND REPORTING ABOUT USE OF A CHARGING DEVICE**
SYSTEM ZUR AUTHENTIFIZIERUNG EINES BENUTZERS BEI UND MELDUNG ÜBER DIE VERWENDUNG EINER LADEVORRICHTUNG
SYSTÈME D'AUTHENTIFICATION D'UN UTILISATEUR AU NIVEAU D'UN DISPOSITIF DE CHARGE ET DE RAPPORT CONCERNANT L'UTILISATION DE CELUI-CI

(30) Priority: 30.10.2020 DE 102020128700
(43) Date of publication of application: 06.09.2023
(73) Proprietor: HeyCharge GmbH, 80333 München (DE)
(72) Inventor: CARDE, Christopher, 80469 Munich (DE); HOLZ, Florian, 70193 Stuttgart (DE)
(74) Representative: DTS Patent- und Rechtsanwälte PartmbB
(86) International application number: PCT/EP2021/079981
(87) International publication number: WO 2022/090392

(56) References cited:
- WO-A1-2013/185860
- US-A1- 2012 331 301
- US-A1- 2017 171 178
- US-A1- 2019 156 382

## Description

The present invention relates to a method for authenticating a user at and reporting about use of a charging device.

In practice, a charging apparatus or device that charges electric vehicles and bills or invoices users for the power consumed requires communication between a central system (through which access is managed, invoices are consolidated, and payments are made) and the individual charging points or devices.

In general, in case of charging devices to be used by a specific group of users and who will pay for the power charged, a real-time, client-server architecture (requiring an IP connection) using a protocol called Open Charge Point Protocol (OCPP) is used. Several charging device manufacturers support their own proprietary control protocols, sometimes instead of or otherwise in addition to OCPP. What all of these solutions have in common is that they require a central server to tell the charging device whether a given user is allowed to charge (or, if the user starts charging via an application communicating directly with the central server, the server tells the charging device simply to start charging). This means that every installation using this system requires an infrastructure-side internet connection - either one per charging device (in case of an embedded 3G/4G radio module in the charging device) or a connection shared across all charging devices (possible with, e.g., a DSL line to the site (DSL = Digital subscriber line)).

OCPP and similar, proprietary protocols work around the problem of user access in areas without mobile network coverage by adding an RFID reader (RFID = Radio-frequency identification) to the charging device and giving the user an RFID card. When presented an RFID card, the charging device can query the OCPP server to know, if the cardholder is allowed to start a charging session or procedure.

US 2019/156382 A1 discloses a method for controlling a charge transfer of an electric vehicle using an electric vehicle charging station, a mobile device, and a cloud. The method includes: receiving, at a mobile device, a message for an electric vehicle of a user directly from the electric vehicle charging station, wherein a user of the mobile device is associated with the electric vehicle to be charged; sending, from the mobile device, the message for the electric vehicle of the user directly to the cloud server; in response to a charging control signal being authorized using identification information and credit account information received from the mobile device, receiving the charging control signal from the cloud server via the mobile device at the electric vehicle charging station, wherein the charging control signal is configured to adjust a parameter used to draw electric power from the electric vehicle charging station; and adjusting the charge transfer based on the adjusted parameter.

US 2017/171178 A1 discloses a system and method are described for an Internet of Things (IoT) gas pump or charging station implementation.

US 2012/331301 A1 discloses systems and methods to allow a smart phone or any terminal to reserve and activate an electric vehicle charger using a web site or server computer system.

WO 2013/185860 A1 discloses a charging station for electric vehicles with a measuring device that measures the energy consumption of a connected electric vehicle, a computing device that converts the measured value of the measuring device into data, and a communication device that transmits at least the data to a central computer. A particularly efficient transmission of the data to the central computer occurs when the communication device is set up to establish a near-field communication connection with a mobile communication device in such a way that a wide-area connection suitable for transmitting the data can be established with the central computer via the near-field communication connection with the mobile communication device.

However, the broadly-employed real-time communication systems to enable this (standards such as OCPP, transmitted over IP networks, using physical connections such as 3/4/5G wireless, DSL, etc) have several major drawbacks:
- Operating cost: 3/4/5G SIMs cost several €/month at minimum, depending on how much data is used. A DSL line to an installation site might cost about €20/month.
- Installation cost / complexity: Several visits to a site may be required to determine the most suitable communication channel, manage and liaise with the installation technician, and install supporting hardware such as routers and cabinets. Also, configuring chargers to connect to a central system using contemporary standards such as OCPP is complex and requires a trained technician.
- Usability: Inherent in this architecture is the requirement that a user must use their mobile device or an RFID card to authenticate to the charge points. In an underground parking, the user frequently will not have mobile network coverage, rendering them unable to use their mobile application to access their charger. Solutions like RFID cards solve the coverage problem, but have poor consumer acceptance (having to fish out a card to charge is a terrible user experience) and drive costs into the charge point hardware (adding an RFID reader).

It is an object of the present invention to further develop a method of the aforementioned kind, in particular in such a way that the authenticating and reporting is more user-friendly, reliable and secure even without mobile network coverage at the site of the charging device.

This object with respect to the authenticating and reporting system is achieved by the method of claim 1. Advantageous embodiments of the present invention regarding the method are described in the dependent claims and also below.

According to an embodiment which forms not part of the present invention, an authenticating and reporting system for authenticating a user at and reporting about use of a charging device is provided. The authenticating and reporting system comprises:
- at least one database unit comprising:
   - at least one cryptography module configured to sign and/or encrypt authentication elements and to decrypt charging report elements, and
   - at least one transmitting and receiving module configured to transmit encrypted authentication elements and to receive encrypted charging report elements;
- at least one charging device comprising:
   - at least one wireless communication module,
   - at least one encrypting and decrypting unit,
   - at least one storage module, and
   - at least one control module,
      wherein the at least one charging device is configured to decrypt the authentication elements, control a charging procedure of a connected chargeable device, provide encrypted charging report elements, and store a timestamp parameter of a transmitted encrypted charging report element or a group of transmitted encrypted charging report elements; and

- at least one mobile device configured to transfer the authentication elements from the database unit to the charging device and the charging report elements from the charging device to the database unit.

The invention is based on the basic idea that the charging devices are enabled to authenticate authorized users and return charging reports to a central database unit or back end server without an infrastructure side internet connection or mobile network connection. In other word, the system works partially without any network connection, i.e. the system is operable even in a partial disconnected state due to the fact that encrypted authentication elements can be transmitted for enabling and unlocking the charging station for an authenticated user and encrypted charging report elements can be received for ensuring a correct billing procedure. The system is operable in an environment without internet connection like in underground parking spaces or areas with low internet or mobile network connection. It is configured to establish an independent connection to the charging device and to perform the needed data transfer for authentication and billing via this independent connection. Once internet connection is available again (e.g. via WiFi or via mobile network), the mobile device of the system connects again with the server infrastructure of the overall system to complete the overall process, especially the billing process. Further, the asynchronous (non-real-time) nature of the system allows the user's mobile device to activate the charging device using a single-use authentication element or token, which was stored on the user's mobile device as long as a mobile network connection was available, even when the mobile device is out of mobile network coverage when next to the charging device, as e.g. in an underground parking.

As a result, this solution can be used with a mobile application installed on the user's mobile device whether or not there is mobile network coverage at the site where the charging device is installed. Accordingly, the system benefits from the fact that no WiFi and/or 3G/4G/5G radio hardware, no OCPP client, and no RFID card and reader are needed. Moreover, the charging devices can be equipped with smaller processors, since no combination of TCP/IP network stack and OCPP client implementation are needed driving down the device costs.

Further, this solution works without the cost or installation effort. Further, the complexity of the overall system layout is reduced. The need of an internet connection on the infrastructure side of the charging device is no longer mandatory as the system does function even without network connection.

What differentiates the system which forms not part of the present invention, in comparison to the drawbacks of known systems described above, is how it uses public key cryptography in order to remotely provision and secure access to a remote, disconnected resource, and guarantee the return of charging report data from that charging device or resource by restricting further access until secure reports of charging are returned to the database unit.

The database unit or back end server inter alia authenticates users, communicates with OCPP chargers, generates single-use authentication elements, processes charging report elements and may generate monthly invoices as well as manages billing of designated payment methods.

Preferably and in a possible embodiment (which forms not part of the present invention), the database unit has a hierarchical structure with at least two levels, wherein the high level is based on a high-level realtime database platform such as Firebase (but could be realized on any other suitable platform) handling all direct user communication, authentication procedures, persistence or data storage, and core application logic, like user management, charging procedure determination, invoicing or billing, etc. The sub level may be based on an OCPP platform handling all the communication with OCPP wallboxes, wherein the sub level relays high-level messages to/from high-level Firebase platform.

The signing of the cryptography module is inter alia achieved by encrypting. The signing pursues the purpose that the recipient of an element sent from the database unit is able to validate that the sender of the element had the private key corresponding to locally stored copy of the sender's public key and that no data was changed during data transfer, wherein encrypting prevents intermediate parties or entities from reading the transferred data.

The transmitting and receiving module can be configured to establish a wireless and/or wired network connection to send and receive elements or messages. It is also conceivable that the transmitting and receiving module comprises a connector module enabling the transmitting and receiving module to establish a wireless and/or wired network connection. The connector can be either integrated into the transmitting and receiving module or connected by a permanent or temporary wireless and/or wired connection.

The system according to the present invention (which forms not part of the present invention) is operable with OCPP enabled charging devices and/or charging device as described further below. In particular, the system is (also) able to replace or supplant OCPP (or equivalent connected charger protocols).

To establish a mobile network connection between the mobile device and the database unit 3G/4G/5G wireless or WiFi network connections or the like are used.

The authentication element or token is effectively a single-use "coupon" generated by the database unit for a given combination of user and charging device to which the user is granted access. Each authentication element is used by a given user for a charging procedure on the designated charging device.

The charging report element is generated at the conclusion of the charging procedure by the charging device, for transmission back to the database use, and contains all information required to invoice the user for the charging procedure made, including inter alia the amount of energy consumed, the length of the charging procedure, a charging device identification parameter, the real (clock) time the charging procedure was started/stopped, a user identification parameter assigned to the charging procedure, and a sequence parameter of the authentication element used to initiate the charging procedure.

The charging device is one of the group of a charge point, charger socket or any other device capable of being connected to a rechargeable device and charging it with a resource such as electricity.

The mobile device is a smartphone, a laptop, a tablet or the like. The term mobile device shall apply to any mobile element, i.e. also covering a vehicle like an electric car.

The encrypting and decrypting unit is a single unit providing both encrypting and decrypting or the unit comprises an encrypting module and a decrypting module.

A chargeable device can be connected to the charging device in that physical plugged-in connection by means of a charging cable is established. But other connections are also conceivable, such as magnetic field-induced wireless charging.

The communication between database unit, mobile device with (mobile) application, and charging device can be asynchronous and accomplished opportunistically in the background. Possibly, the only exception to the adapted background communication is the communication related to a user-initiated operation by means of the application run on the mobile device, such as starting a charging procedure, which happens in the foreground and synchronously. In effect, this means that any data, i.e. in particular charging report elements, stored on the charging device bound for the database unit will be transmitted opportunistically to a mobile device any user who comes within range of the charging device. Likewise, any data from a charging device cached on a mobile device bound for the database unit will be transmitted to that database unit whenever a viable mobile network connection (and therefore the database unit) becomes available. In addition, data, i.e. in particular authentication elements, on the database unit waiting for a mobile device is transmitted whenever possible, as it is likely to be needed on the mobile device in a situation where a mobile network connection to the database unit is unavailable.

In another possible embodiment, the authentication elements are single-use elements each usable for one charging procedure.

The single-use authentication elements or tokens can be assigned to a given user and/or a specific charging device.

According to a core aspect of the present invention, after a first single-use authentication element has been provided to a user a second or further single-use authentication element will only be provided in exchange for a charging report element or a bundle of charging report elements related to the preceding authentication element or elements, respectively.

In a further possible embodiment, one authentication element comprises
- a charging device identification parameter,
- a sequence parameter,
- a user identification parameter, and
- a confirmation timestamp of a charging report element.

The system may provide one or more authentication elements at system start. The exact number is a system parameter which governs the total risk in case of a malicious user. Typical numbers would be 1, 2, or 3 but can be anything else.

Due to the charging device identification parameter the authentication element is assigned to a specific charging device. Similarly, the user identification parameter assigns the authentication element to a given user such that, for example, if the authentication element is used for initiating a charging procedure the user becomes the addressee of the invoice.

The sequence parameter is checked by the charging device as part of the validation of the authentication element to ensure that a new, subsequent authentication element is used for the charging procedure. For this purpose, it is checked whether the value of the sequence parameter is greater than the value of the last sequence parameter stored in the charging device. Value of the sequence parameters may therefore simply be integer numbers.

Authentication elements may be generated to be used with one or more charging devices.

As soon as the charging device registers the confirmation timestamp during validation of the authentication element, it discards all previously open charging report elements from the storage module, as the time stamp serves as confirmation that the previously open charging report elements have been securely transmitted to the database unit for invoicing.

In another possible embodiment, the authentication element further comprises configuration data of an assigned charging device.

Configuration data include any value necessary to be set by charging device in relation to the user's connected chargeable device before starting the charging procedure.

In a further possible embodiment, the at least one mobile device synchronizes with the database unit whenever a mobile network coverage is available.

In order to ensure that the user always has a valid authenticating element on the mobile device, with which he can, if necessary, carry out a charging procedure on the charging device, at whose installation side there is possibly no mobile network connection, the mobile device regularly synchronizes itself with the database unit if there is a sufficient mobile network connection.

It can be provided that the synchronization takes place in regular time intervals if the mobile network connection is sufficient or at least once so that the next valid authenticating element is transferred to the mobile device.

In another possible embodiment, the charging device is pre-paired to the database unit.

Pre-paired means that during the manufacturing process of charging devices, on the one hand, the public key is extracted (or otherwise recorded) from each manufactured charging device and stored or recorded in a database unit according to the present invention. On the other hand, the public key of the database unit is pre-loaded into the storage module of the respective charging devices, particularly into the non-volatile area of the storage module.

Furthermore, pre-pairing may comprise that an allocation between a specific manufactured charging device and a given user is stored in the database unit before shipping the respective charging device to the user. This results in a charging device that is already configured to work from end-to-end as soon as it is powered on, avoiding the need for a trained technician to set up and configure the product. In other words, the delivered charging device is a "plug-and-play" device, which has only be wired to power, as there is nothing unique to the property to configure, such as communication settings or channels, and the necessary encryption keys to establish end-to-end connectivity with the charging device have already been extracted at the time of manufacture, avoiding the need to exchange keys during an on-site setup process.

In yet another embodiment, the cryptography module of the database unit and the encrypting and decrypting module use public key cryptography.

Both the charging device and the database unit are equipped with a public key cryptography module, wherein preferably symmetric encryption keys are used.

In a further possible embodiment, the mobile device comprises an application configured to interoperate with the database unit and the charging device.

Different applications are provided, each of which is intended for a different group of users:
In case of users of a chargeable device, like drivers of an electric vehicle, the mobile application comprises
- starting a charging procedure, wherein it has to be distinguished whether the charging device has a network connection or not. If the charger is connected to a network, e.g. to the internet via 3G/4G/5G wireless connection or a LAN connection, the charging procedure is released directly from the database unit via this connection. In the case of insufficient network coverage, a valid authentication element is transmitted to the charging device to start the charging procedure. It should be understood, however, that the authentication element can also be used with an established network connection, i.e., it can be used to start the charging procedure by transfer. Accordingly, the initiation of the charging procedure by the database unit with an established network connection is optional (e.g. there can be a single-use element available on the mobile device with our without network connection, and it can be used regardless whether there is any kind of internet connection or not);
- ending the charging procedure, wherein the same conditions apply as for starting the charging procedure;
- enter/update payment methods;
- review charging procedure history along with invoices; and
- monitor the charging procedure.

In case of property administrator, the application, which may be a mobile or a web application, comprises
- configure newly installed charging devices;
- invite new users;
- remove existing users;
- add/remove permissions to use specific charging devices;
- monitor usage of charging devices of the property; and
- set pricing (if applicable) for usage of the charging devices of the property.

Further, a back-office administrator application is provided comprising:
- onboarding, editing, and/or maintaining properties and charging devices on that properties;
- inviting property administrators for a specific property; and
- providing customer service such as billing or invoicing exception handling.

According to another possible embodiment, the application is further configured to start and stop the charging procedure, monitor the charging procedure and display charging report elements.

It is further possible that the mobile device and/or the application are untrusted.

Untrusted means that the mobile device and in particular the application run on the mobile device are regarded as insecure. Accordingly, it cannot be guaranteed that the application will not be accessed, abused, or reverse engineered by malicious parties.

But by using encrypted authentication elements as well as encrypted charging report elements, it is impossible to circumvent the end-to-end guarantees provided by the system according to the present invention, even if you have unlimited access to examine, modify, or subvert the mobile device and/or mobile application.

A method for authenticating a user at and reporting about use of a charging device comprises the steps of:
- generating at least one first encrypted authentication element in a database unit;
- transferring the first encrypted authentication element to a charging device via a first mobile device;
- decrypting the first encrypted authentication element in the charging device;
- validating the decrypted authentication element to initiate a first charging procedure;
- generating a first encrypted charging report element in the charging device after ending the first charging procedure;
- storing the first encrypted charging report element in a storage module of the charging device;
- transferring the first encrypted charging report element to the database unit via the first mobile device or another mobile device; and
- providing a second encrypted authentication element after processing the first encrypted charging report element.

The method is in particular formed to operate the system described above. It therefore has the same advantages as the system described above.

As in general the user and their mobile device is regarded untrusted, it cannot be assured that data for completed charging procedures will be returned. A malicious user could modify the application (or manipulate it by deleting and reinstalling it between charging procddures) in order to prevent charging report elements from being returned to the database unit, thereby subverting the invoicing. Therefore, the method according to the present invention is based on the idea that only single-use authentication elements are provided in return for completed charging report elements. Hence, the maximum liability per user and charging device is bounded by the maximum permitted charging procedure volume multiplied by the number of permitted outstanding authentication elements (typically one or two). In this way, a user's continued usage of the service is impaired until he (or, conceivably, another user of the system) provides the usage information for the previous charging procedure.

The individual steps can be divided into the following two groups:
- Secure, offline authentication:
   The database unit generates a single-use authentication element each of which can be exchanged with the designated charging device for which it was generated for a single charging procedure of designated (maximum) length and volume. The database unit generates a certain number (typically 1 or 2) of these authentication elements for each combination of authorized user and charging device, and the mobile application run on the user's mobile device synchronizes all available authentication elements for the signed-in user whenever it has mobile network coverage. This guarantees that users in good standing will have single-use authentication elements for the charging devices(s) they are authorized to use available even if they don't have access to the mobile network at the location of the charging devices.
   An authentication element is generated by creating a plaintext (insecure) authentication element comprising a user identification parameter, a charging device identification paramter, some configuration data of the charging device, a sequence number, and a charging report confirmation timestamp. This authentication element is then signed (allows recipient to validate that the sender had the private key corresponding to the locally stored copy of the sender's public key and that no data was changed) and encrypted (prevents intermediate parties from reading the data).
   When the authentication element is presented to the designated charging device, the charging device decrypts the data, verifies the signature, and checks the sequence number against a local table of users and last-stored sequence numbers. If the signature is validated and the sequence number is greater than the last-stored sequence number, the charging procedure is started (and the stored sequence number for that user is updated to the presented sequence number).
- Secure, offline billing:
   At the end of a charging procedure (whether explicitly ended by a user with the mobile application, or implicitly due to a disconnected chargeable device or exceeding the charging procedure parameters such as maximum time or volume), the charging device prepares and generates a secure, signed charging report element containing all data required to bill the user for that charging procedure. The charging device sends a package of all unacknowledged charging report elements to any available system user whose mobile device connects to said charging device for any purpose (ending the charging procedure, starting a new charging procedure etc.). The charging device keeps an acknowledgement timestamp, allowing it to discard (and no longer attempt to return) stored charging report elements that have already been received by the database unit. In other words, to ensure the integrity of the charging report elements, a charging report element is generated and sent to the database unit via mobile device, the database unit decrypts the charging report element and stores the element. After the element is recorded, the database unit generates an acknowledgement message and/or timestamp for the charging device, that it has successfully processed the charging report element. Only after receiving this acknowledgment, the charging device is allowed to discard all stored charging report elements. Any mobile device which has access to this charging device will pick up this message and once it is near the charging device, mobile device will transfer the acknowledgement message to the charging device. The charging device receives the acknowledgement from the database unit, discards the stored charging report elements and generates another message that acknowledgement was successful. This message serves the purpose to tell the database unit and the mobile devices to stop sending the acknowledgement messages (from previous step) to the charging device, since the acknowledgment has already been processed. Additionally or alternatively, when the charging device receives the next single-use authentication element having a confirmation timestamp, all pending charging report elements prior to the confirmation timestamp can be discarded.

In order to prevent that the authentication element was manipulated by an intermediary at least one of the steps of decrypting and validating the transmitted authentication element in the charging device is mandatory.

In another possible embodiment of the method, validating the decrypted authentication element comprises verifying whether a sequence parameter of the decrypted authentication element is higher than a last sequence parameter stored in the storage module of the charging device.

Additionally or alternatively, validating the decrypted authentication element comprises verifying whether a charging device identification parameter of the decrypted authentication element matches a charging device identification parameter stored in the storage module of the charging device.

This ensures a further security check before release of the charging procedure to avoid unauthorized access and to prevent the user from accidentally connecting his chargeable device into the wrong charging device.

In a further possible embodiment, decrypting uses a shared secret derived from an elliptic-curve Diffie-Hellman (ECDH) public-private key pair. In other words, decrypting uses a shared secret derived using the database unit ECDH public key and the charging device ECDH private key, which may be stored on a cryptochip, i.e. is not accessible for any mobile application. Further, the shared secret may also be stored in a cryptochip hardware slot which is further used to decrypt elements that are received from the database unit-

According to an embodiment which forms not part of the present invention a charging device is provided, comprising:
- at least one wireless communication module configured to transmit charging report elements and to receive authentication elements;
- at least one storage module configured to store a sequence parameter of received authentication elements;
- at least one control module configured to control a charging procedure of a chargeable device connected to the charging device; and
- at least one encrypting and decrypting module configured to decrypt encrypted authenticating elements and to encrypt charging report elements.

Possibly, the charging device can further comprise a pre-programmed public-private key pair or a self-generated public-private key pair.

In further possible embodiment of the charging device, the wireless communication module uses Bluetooth Low Energy.

So that a connection to a mobile device can be established, the charging device must be equipped with a wireless communication channel. It is preferred to use Bluetooth Low Energy (BLE) as it is broadly available in every smartphone and is easily and cheaply implementable in a charging device. But it should be understood that the wireless communication channel is not limited to BLE. Other wireless communication channels may be provided as well, e.g. near field communication (NFC), Ultra-wideband (UWB), or the like.

The invention further relates to a use of an authenticating and reporting system as defined above.

In the following, further advantages and embodiments of the present invention are described in conjunction with the attached drawings. Thereby, the expression "left", "right", "below", and "above" are referred to the drawings in an orientation of the drawings which allows the normal reading of the reference signs. The drawings should not necessarily represent the forms of execution to scale. Rather, the drawings, where useful for explanation, are executed in schematic and/or slightly distorted form. For the sake of simplicity, identical or similar parts or parts with identical or similar functions are hereinafter referred to by the same reference signs.

It is shown in:
- Fig. 1: an embodiment of the method according to the invention;
- Fig. 2: an embodiment of the method carried out with the system shown in Fig. 1; and
- Fig. 3: an embodiment of the authentication element used in the system shown in Fig. 1.

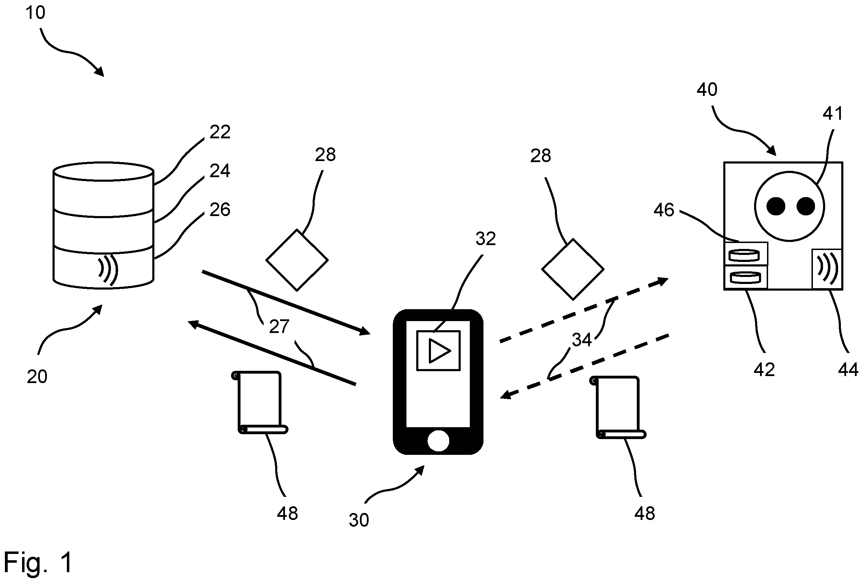

**Fig. 1** shows an embodiment of the authenticating and reporting system according to an example in connection with an embodiment of the method according to the present invention.

The system 10 comprises a database unit 20.

In the embodiment, the database unit 20 in turn comprises a cryptography module 22, a memory module 24, and a wireless transmitting and receiving module 26. In further embodiments, some or all of these modules 22 to 26 may be comprised by separate units or otherwise be formed as separate units.

The system 10 further comprises a mobile device 30.

In the embodiment, the mobile device 30 comprises a mobile application 32.

The system 10 furthermore comprises a charging device 40.

In the embodiment, the charging device 40 comprises a connector 41, a wireless communication module 44, a storage module 42, an encrypting and decrypting unit 46, and a control module (not shown).

The connector 41 is connected to a chargeable device (not shown), preferably via a wireless data or network connection.

Between the database unit 20 and the mobile device 30 there is at least temporarily a network connection 27, preferably wireless, which is established in a known way. In this embodiment, the database unit 20 and the mobile device 30 are connected to a common network which is used to establish a data connection, in particular the Internet and/or a mobile network connection. In different embodiments, wireless and wired connections may be provided, but wireless connections are preferred. Through the network connection an authentication element 28 generated and encrypted in the database unit 20 is sent to the mobile device 30.

Between the mobile device 30 and the charging device 40 there is at least temporarily a wireless connection 34, such as a BLE, established in order to send or transfer the authentication element 28 from the mobile device 30 to the charging device 40.

Furthermore, the wireless connection between the charging device 40 and the mobile device 30 is used to transfer a charging report element 48 which further on is transferred via a mobile network connection from the mobile device 30 to the database unit 20.

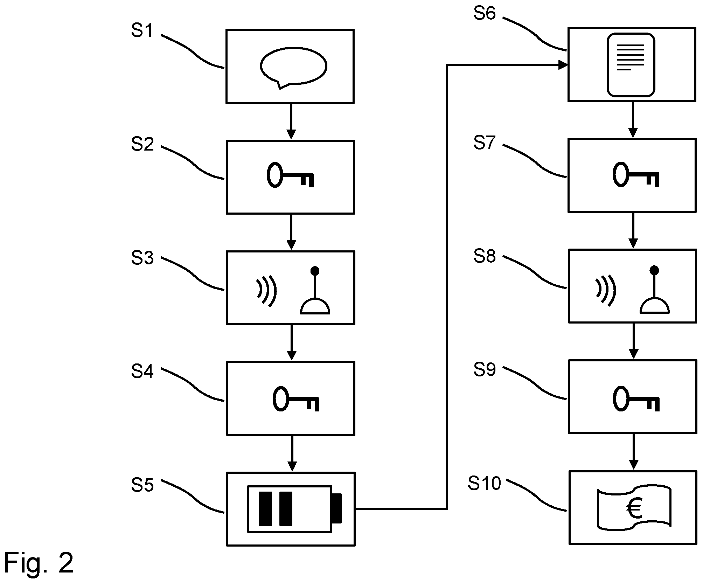

With reference to **Fig. 2****,** an embodiment of how to carry out the method is described. This is based on the above-mentioned embodiment of the system, which in turn is specified in more detail in the following explanations.

In the embodiment, a single charging procedure of a user's chargeable device is described. At the appropriate point, however, reference is made to the extent to which the procedure also includes further steps or intermediate steps if several users wish to charge their respective chargeable devices using the system according to the present invention.

In a step S1, upon a user request, an authentication element 28 is generated in the database unit 20. However, it is also conceivable that the database unit 20 has already stored a corresponding authentication element in the memory module 24, which for example was stored when the user registered.

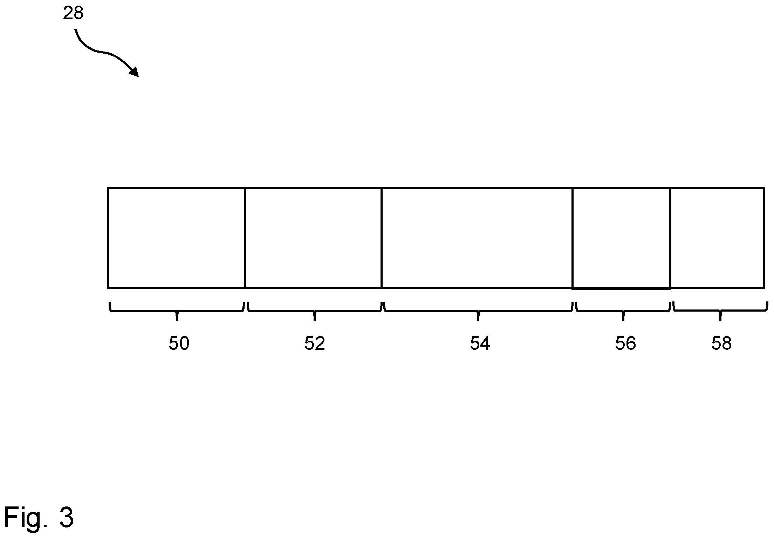

As shown in **Fig. 3****,** one authentication element 28 which is preferably formed as a data structure may comprise a user identification parameter 50, a charging device identification parameter 52, a sequence number 56, and a charging report confirmation timestamp 58. Furthermore, the authentication element 28 may comprise some configuration data 54.

Again referring to **Fig. 2****,** in a step S2, the authentication element 28 then signed in the cryptography module 22 of the database unit 20 which allows the recipient, i.e. the charging device 40, to validate that the sender, i.e. the database unit 20, had the private key corresponding to the locally stored copy of the sender's public key and that no data was changed. Moreover, the authentication element 28 is encrypted in the cryptography module 22 which prevents intermediate parties from reading the data or the content of the authentication element 28. Both safety measures can also be regarded as independent method steps.

In a subsequent step S3, the signed and encrypted authentication element 28 is first transferred to the user's mobile device 30 on which preferably a mobile application 32 for operating the charging procedure is operably installed, as soon as a sufficiently good mobile network connection, preferably a wireless network connection 27, is established between the database unit 20 and the mobile device 30. Thus, the user is provided with a valid authentication element 28 to start the charging procedure at a designated charging device 40 and can go to the designated charging device 40, which in case of an underground car park is usually installed in a place where no direct network connection between database unit 20 and mobile device 30 can be established. Therefore, a wireless connection 34, preferably a wireless BLE connection, is established between mobile device 30 and charging device 40 and the authentication element 28 is transferred to the charging device 40 via this wireless connection 34.

In a step S4, the received authentication element 28 is first decrypted by the encrypting and decrypting unit 46 of the charging device 40. Furthermore, the decrypted authentication element 28 is validated in the encrypting and decrypting unit 46 by checking if the charging device identification parameter 50 contained in the authentication element 28 corresponds to the charging device 40 to which the authentication element 28 was transferred and to which the user's chargeable device is connected or should be connected. Moreover, during validationit is checked if the sequence parameter 56 also contained in the authentication element 28 is greater or higher than the one stored in the storage module 42 of the charging device 40. This ensures inter alia that the authentication element 28 of the last charging procedure is not used again to start the charging procedure, but that a subsequent authentication element 28 was generated by the database unit 20.

If the authentication element 28 has successfully passed the checks in step S4, the charging procedure can be started in a step S5. This procedure can start e.g. as soon as the user connects his chargeable device to the charging device 40. In the case of an electric vehicle this would mean that the user plugs-in the charging cable to the charging device 40. But it is also possible that the charging procedure is started via the mobile application 32 on the mobile device 30 by user input. The charging procedure ends if, for example, the user initiates the ending of the charging procedure by input in the mobile application 32 or disconnects the connection between the chargeable device and the charging device 40 or if the maximum charging time or the maximum charging volume has been reached.

After ending the charging procedure, a charging report element 48 containing all data required to bill the user for the charging procedure is generated in the charging device 40 in a step S6.

In a following step S7, the charging report element 48 is then encrypted in the encrypting and decrypting unit 46, so that this element 48 is also protected against manipulation or the like during transmission to the database unit 20.

In a step S8, the encrypted charging report element 48 is transferred to the mobile device 30 via the wireless connection 34. Preferably not only the last charging report element 48, but all reports stored in the storage module of the charging device 40 and not yet transmitted are transmitted to the mobile device 30. In this respect, it is not important that the charging report element 48 is transmitted exactly to the mobile device 30, which has transmitted the corresponding authentication element 28 to the charging device 40 to initiate the charging procedure. Rather, the charging report element 48 or the bundle of reports is transmitted to the mobile device 30, which next establishes a wireless connection 34 to the charging device 40 after the charging procedure is completed or ended. From the terminal, the charging report element 48 or the bundle of reports is then transmitted to the database unit 20 via the wireless network connection 27 as soon as this connection 27 is established, i.e. as soon as there is sufficient mobile network coverage.

In a step S9, the encrypted charging report element 48 or the bundle of encrypted reports received by the database unit 20 is then decrypted in cryptography module 22 of the database unit 20.

Finally, in a step S10 which can also be divided into two separate substeps, the decrypted charging report element 48 or the bundle of reports are processed so that on the one hand the invoice(s) can be issued to the user(s) and on the other hand the next authentication element(s) 28 can be generated for a further charging procedure(s). Moreover, after the charging report element 48 is recorded or stored, the database unit 20 generates an acknowledgement message and/or timestamp for the charging device 40, that it has successfully processed the charging report element 48. Only after receiving this acknowledgment message and/or timestamp, the charging device 40 is allowed to discard all charging report element(s) 48 stored in the storage module 42. Any mobile device 30 which has access to this charging device 40 will pick up this message and once it is near the charging device 40, mobile device will transfer the acknowledgement message to the charging device. Hence, the charging device 40 receives the acknowledgement from the database unit 20, discards the stored charging report element(s) 48 and generates another message that acknowledgement was successful. This message serves the purpose to tell the database unit 20 and the mobile device(s) 30 to stop sending the acknowledgement messages to the charging device 40, since the acknowledgment has already been processed.

### Reference signs:

- 10: system
- 20: database unit
- 22: cryptography module
- 24: memory module
- 26: wireless transmitting and receiving module
- 27: wireless network connection
- 28: authentication element
- 30: mobile device
- 32: mobile application
- 34: wireless connection
- 40: charging device
- 41: connector
- 42: storage module
- 44: wireless communication module
- 46: encrypting and decrypting unit
- 48: charging report element
- 50: charging device identification parameter
- 52: user identification parameter
- 54: configuration data
- 56: sequence parameter
- 58: confirmation timestamp of a charging report element

- S1: requesting and generating an authentication element at a database unit
- S2: encrypting the authentication element in the database unit
- S3: wirelessly transferring the authentication element to the charging device by means of a mobile device
- S4: decrypting and validating the authentication element in the charging device
- S5: starting and ending a charging procedure
- S6: generating a charging report element
- S7: encrypting the charging report element
- S8: wirelessly transferring the authentication element to the database unit by means of the mobile device
- S9: decrypting the charging report element
- S10: invoicing and generating a subsequent authentication element

## Claims

1. A method for authenticating a user at and reporting about a use of a charging device (40) using an authenticating and reporting system (10), the method comprising the steps of:
- generating at least one first single-use encrypted authentication element (28) in a database unit (20), wherein the single-use authentication element (28) is configured to grant an access for the user for a charging procedure on a designated charging device (40);
- transferring the first encrypted authentication element (28) to the charging device (40) via a first mobile device (30);
- decrypting the first encrypted authentication element (28) in the charging device (40);
- validating the decrypted authentication element (28) to initiate a first charging procedure in the charging device (40);
- generating a first charging report element (48) in the charging device (40) after ending the first charging procedure;
- storing the first charging report element (48) in a storage module (44) of the charging device (40);
- transferring the first charging report element (48) to the database unit (20) via the first mobile device (30) or another mobile device; and
- providing a second single-use encrypted authentication element (28) to the user only after processing the first charging report element (48) in the database unit (20) to thereby restrict a further access until the first charging report element (48) is returned to the database unit (20),
wherein the first and second single-use authentication elements (28) are single-use tokens,
**characterized in that**
wherein the first and second authentication elements (28), each comprises:
- a charging device identification parameter (50),
- a user identification parameter (52),
- a sequence parameter (56), and
- a confirmation timestamp (58) of a charging report element (48),
wherein generating a first charging report element (48) in the charging device (40) comprises generating a first encrypted charging report element (48), wherein validating the decrypted authentication element (28) comprises verifying whether the sequence parameter (56) of the decrypted authentication element (28) is higher than a last sequence parameter stored in the storage module (44) of the charging device (40), and
wherein once the encrypted authentication element (28) is presented to the designated charging device (40), the charging device (40) decrypts it, verifies a signature, and checks the sequence parameter (56) against a local table of users and last-stored sequence parameters.

2. The method for authenticating a user at and reporting about a use of a charging device (40) according to claim 1, wherein validating the decrypted authentication element (28) further comprises verifying whether the charging device identification parameter (50) of the decrypted authentication element (28) matches a charging device identification parameter (50) stored in the storage module (44) of the charging device (40).

3. The method for authenticating a user at and reporting about a use of a charging device (40) according to claim 1 or 2, wherein decrypting uses a shared-secret derived from an elliptic-curve Diffie-Hellman public-private key pair.

4. An authenticating and reporting system (10) configured for performing the method according to any one of the proceedings claims,
the authenticating and reporting system (10) comprising a database unit (20), a mobile device (30), and a charging device (40);
wherein the database unit (20) is configured to generate a first single-use authentication element (28);
wherein the charging device (40) is configured to decrypt and validate the first authenticating element (28), and to generate a first encrypted charging report element (48) after ending a first charging procedure;
wherein the mobile device (30) is configured to transfer the first authentication element (28) to the charging device (40), and to transfer the first encrypted charging report element (48) to the database unit (20); and
wherein the database unit (20) is further configured to generate a second single-use authentication element (28) for granting a further access for the user after receiving the first charging report element (48), thereby restricting a further access until the first encrypted charging report element (48) is returned to the database unit (20), wherein the first and second single-use authentication elements (28) are single-use tokens, and
wherein the first and second authentication elements (28), each comprises:
- a charging device identification parameter (50),
- a user identification parameter (52),
- a sequence parameter (56), and
- a confirmation timestamp (58) of a charging report element (48), and
wherein validating the decrypted authentication element (28) comprises verifying whether the sequence parameter (56) of the decrypted authentication element (28) is higher than a last sequence parameter stored in the storage module (44) of the charging device (40).

## Patentansprüche

1. Verfahren zur Authentifizierung eines Benutzers bei und Meldung über die Verwendung einer Ladevorrichtung (40) mithilfe eines Authentifizierungs- und Meldesystems (10), wobei das Verfahren die Schritte umfasst:
- Erzeugen von mindestens einem ersten einmalig zu verwendenden, verschlüsselten Authentifizierungselement (28) in einer Datenbankeinheit (20), wobei das einmalig zu verwendende Authentifizierungselement (28) dafür ausgelegt ist, dem Benutzer für einen Ladevorgang an einer bestimmten Ladevorrichtung (40) Zugang zu gewähren;
- Übermitteln des ersten verschlüsselten Authentifizierungselements (28) an die Ladevorrichtung (40) über ein erstes mobiles Gerät (30);
- Entschlüsseln des ersten verschlüsselten Authentifizierungselements (28) in der Ladevorrichtung (40);
- Validieren des entschlüsselten Authentifizierungselements (28), um einen ersten Ladevorgang in der Ladevorrichtung (40) einzuleiten;
- Erzeugen eines ersten Ladeberichtelements (48) in der Ladevorrichtung (40) nach Beendigung des ersten Ladevorgangs;
- Speichern des ersten Ladeberichtelements (48) in einem Speichermodul (44) der Ladevorrichtung (40);
- Übermitteln des ersten Ladeberichtelements (48) über das erste mobile Gerät (30) oder ein anderes mobiles Gerät an die Datenbankeinheit (20); und
- Bereitstellen eines zweiten einmalig zu verwendenden, verschlüsselten Authentifizierungselements (28) für den Benutzer erst nach Verarbeiten des ersten Ladeberichtelements (48) in der Datenbankeinheit (20), um dadurch einen weiteren Zugang zu sperren, bis das erste Ladeberichtelement (48) an die Datenbankeinheit (20) zurückgegeben wird,
wobei es sich bei dem ersten und zweiten einmalig zu verwendenden Authentifizierungselement (28) um einmalig zu verwendende Tokens handelt,
**dadurch gekennzeichnet, dass**
wobei das erste und zweite Authentifizierungselement (28) jeweils enthalten:
- einen Ladevorrichtungs-Identifikationsparameter (50),
- einen Benutzeridentifikationsparameter (52),
- einen Sequenzparameter (56) und
- einen Bestätigungszeitstempel (58) eines Ladeberichtelements (48),
wobei das Erzeugen eines ersten Ladeberichtelements (48) in der Ladevorrichtung (40) das Erzeugen eines ersten verschlüsselten Ladeberichtelements (48) umfasst,
wobei das Validieren des entschlüsselten Authentifizierungselements (28) umfasst, zu überprüfen, ob der Sequenzparameter (56) des entschlüsselten Authentifizierungselements (28) höher ist als der letzte Sequenzparameter, der im Speichermodul (44) der Ladevorrichtung (40) gespeichert wurde, und
wobei, sobald das verschlüsselte Authentifizierungselement (28) der bestimmten Ladevorrichtung (40) präsentiert wird, die Ladevorrichtung (40) es entschlüsselt, eine Signatur überprüft und den Sequenzparameter (56) anhand einer lokalen Tabelle von Benutzern und hinsichtlich zuletzt gespeicherten Sequenzparametern gegenprüft.

2. Verfahren zur Authentifizierung eines Benutzers bei und Meldung über die Verwendung einer Ladevorrichtung (40) nach Anspruch 1, wobei das Validieren des entschlüsselten Authentifizierungselements (28) darüber hinaus umfasst, zu überprüfen, ob der Ladevorrichtungs-Identifikationsparameter (50) des entschlüsselten Authentifizierungselements (28) mit einem Ladevorrichtungs-Identifikationsparameter (50) übereinstimmt, der im Speichermodul (44) der Ladevorrichtung (40) gespeichert ist.

3. Verfahren zur Authentifizierung eines Benutzers bei und Meldung über die Verwendung einer Ladevorrichtung (40) nach Anspruch 1 oder 2, wobei beim Entschlüsseln ein gemeinsames Geheimnis, abgeleitet von einem öffentlichprivaten Diffie-Hellman-Schlüsselpaar mit elliptischer Kurve, verwendet wird.

4. Authentifizierungs- und Meldesystem (10), das dafür ausgelegt ist, das Verfahren nach einem der vorhergehenden Ansprüche durchzuführen,
wobei das Authentifizierungs- und Meldesystem (10) eine Datenbankeinheit (20), ein mobiles Gerät (30) und eine Ladevorrichtung (40) aufweist;
wobei die Datenbankeinheit (20) dafür ausgelegt ist, ein erstes einmalig zu verwendendes Authentifizierungselement (28) zu erzeugen;
wobei die Ladevorrichtung (40) dafür ausgelegt ist, das erste Authentifizierungselement (28) zu entschlüsseln und zu validieren sowie nach Beendigung eines ersten Ladevorgangs ein erstes verschlüsseltes Ladeberichtelement (48) zu erzeugen;
wobei das mobile Gerät (30) dafür ausgelegt ist, das erste Authentifizierungselement (28) an die Ladevorrichtung (40) und das erste verschlüsselte Ladeberichtelement (48) an die Datenbankeinheit (20) zu übermitteln; und
wobei die Datenbankeinheit (20) darüber hinaus dafür ausgelegt ist, ein zweites einmalig zu verwendendes Authentifizierungselement (28) zu erzeugen, um dem Benutzer nach Empfang des ersten Ladeberichtelements (48) einen weiteren Zugang zu gewähren, wodurch ein weiterer Zugang gesperrt wird, bis das erste verschlüsselte Ladeberichtelement (48) an die Datenbankeinheit (20) zurückgegeben wird, wobei es sich bei dem ersten und zweiten einmalig zu verwendenden Authentifizierungselement (28) um einmalig zu verwendende Tokens handelt, und
wobei das erste und zweite Authentifizierungselement (28) jeweils enthalten:
- einen Ladevorrichtungs-Identifikationsparameter (50),
- einen Benutzeridentifikationsparameter (52),
- einen Sequenzparameter (56) und
- einen Bestätigungszeitstempel (58) eines Ladeberichtelements (48), und
wobei das Validieren des entschlüsselten Authentifizierungselements (28) umfasst, zu überprüfen, ob der Sequenzparameter (56) des entschlüsselten Authentifizierungselements (28) höher ist als der letzte Sequenzparameter, der im Speichermodul (44) der Ladevorrichtung (40) gespeichert wurde.

## Revendications

1. Procédé d'authentification d'un utilisateur au niveau d'un dispositif de charge (40) et de report concernant l'utilisation de celui-ci à l'aide d'un système d'authentification et de report (10), le procédé comprenant les étapes consistant à:
- générer au moins un premier élément d'authentification crypté à usage unique (28) dans une unité de base de données (20), dans lequel l'élément d'authentification à usage unique (28) est configuré pour garantir un accès pour l'utilisateur pour une procédure de charge sur un dispositif de charge désigné (40) ;
- transférer le premier élément d'authentification crypté (28) au dispositif de charge (40) via un premier dispositif mobile (30) ;
- décrypter le premier élément d'authentification crypté (28) dans le dispositif de charge (40) ;
- valider l'élément d'authentification décrypté (28) pour initier une première procédure de charge dans le dispositif de charge (40) ;
- générer un premier élément de report de charge (48) dans le dispositif de charge (40) à la fin de la première procédure de charge ;
- mémoriser le premier élément de report de charge (48) dans un module de mémorisation (44) du dispositif de charge (40) ;
- transférer le premier élément de report de charge (48) à l'unité de base de données (20) via le premier dispositif mobile (30) ou un autre dispositif mobile ; et
- fournir un second élément d'authentification crypté à usage unique (28) à l'utilisateur uniquement après avoir traité le premier élément de report de charge (48) dans l'unité de base de données (20) pour ainsi restreindre un accès ultérieur jusqu'à ce que le premier élément de report de charge (48) soit renvoyé à l'unité de base de données (20) ;
dans lequel les premier et second éléments d'authentification à usage unique (28) sont des jetons des à usage unique ;
**caractérisé en ce que :**
les premier et second éléments d'authentification (28) comprennent chacun :
- un paramètre d'identification de dispositif de charge (50) ;
- un paramètre d'identification d'utilisateur (52) ;
- un paramètre de séquence (56) ; et
- un horodatage de confirmation (58) d'un élément de report de charge (48) ;
dans lequel la génération d'un premier élément de report de charge (48) dans le dispositif de charge (40) comprend la génération d'un premier élément de report de charge crypté (48) ;
dans lequel la validation de l'élément d'authentification décrypté (28) comprend la vérification de si oui ou non le paramètre de séquence (56) de l'élément d'authentification décrypté (28) est supérieur au dernier paramètre de séquence mémorisé dans le module de mémorisation (44) du dispositif de charge (40) ; et dans lequel une fois l'élément d'authentification crypté (28) présenté au dispositif de charge (40) désigné, le dispositif de charge (40) le décrypte, vérifie une signature et vérifie le paramètre de séquence (56) par rapport à des tables d'utilisateur locales et aux derniers paramètres de séquence mémorisés.

2. Procédé d'authentification d'un utilisateur au niveau d'un dispositif de charge (40) et de report concernant l'utilisation de celui-ci selon la revendication 1, dans lequel la validation de l'élément d'authentification décrypté (28) comprend en outre la vérification de si oui ou non le paramètre d'identification de dispositif de charge (50) de l'élément d'authentification décrypté (28) coïncide avec un paramètre d'identification de dispositif de charge (50) mémorisé dans le module de mémorisation (44) du dispositif de charge (40).

3. Procédé d'authentification d'un utilisateur au niveau d'un dispositif de charge (40) et de report concernant l'utilisation de celui-ci selon la revendication 1 ou 2, dans lequel le décryptage utilise une dérivée à secret partagé d'une paire de clés publique-privée de courbe elliptique de Diffie-Hellman.

4. Système d'authentification et de report (10) configuré pour mettre en œuvre le procédé selon l'une quelconque des revendications précédentes :
le système d'authentification et de report (10) comprenant une unité de base de données (20), un dispositif mobile (30) et un dispositif de charge (40) ;
dans lequel l'unité de base de données (20) est configurée pour générer un premier élément d'authentification à usage unique (28) ;
dans lequel le dispositif de charge (40) est configuré pour décrypter et valider le premier élément d'authentification (28) et pour générer un premier élément de report de charge (48) crypté à la fin d'une première procédure de charge ;
dans lequel le dispositif mobile (30) est configuré pour transférer le premier élément d'authentification (28) au dispositif de charge (40) et pour transférer le premier élément de report de charge crypté (48) à l'unité de base de données (20) ; et
dans lequel l'unité de base de données (20) est en outre configurée pour générer un second élément d'authentification à usage unique (28) pour garantir un accès ultérieur à l'utilisateur après réception du premier élément de report de charge (48), restreignant ainsi un accès ultérieur jusqu'à ce que le premier élément de report de charge crypté (48) soit renvoyé à l'unité de base de données (20), dans lequel les premier et second éléments d'authentification à usage unique (28) sont des jetons à usage unique ; et
dans lequel les premier et second éléments d'authentification (28) comprennent chacun :
- un paramètre d'identification de dispositif de charge (50) ;
- un paramètre d'identification d'utilisateur (52) ;
- un paramètre de séquence (56) ; et
- un horodatage de confirmation (58) d'un élément de report de charge (48) ; et
dans lequel la validation de l'élément d'authentification décrypté (28) comprend la vérification de si oui ou non le paramètre de séquence (56) de l'élément d'authentification décrypté (28) est supérieur à un dernier paramètre de séquence mémorisé dans le module de mémorisation (44) du dispositif de charge (40).
